**Europäisches Patentamt**

**European Patent Office**

**Office européen des brevets**

(19)

(11) Veröffentlichungsnummer: **0 249 166 B1**

(12) **EUROPÄISCHE PATENTSCHRIFT**

(45) Veröffentlichungstag der Patentschrift: **22.05.91**

(51) Int. Cl.⁵: **B60Q 1/00,** B60S 1/08, H01H 9/40

(21) Anmeldenummer: **87108166.7**

(22) Anmeldetag: **05.06.87**

(54) **Schalter zur Ansteuerung eines Elektromotors einer Wischeranlage.**

(30) Priorität: **11.06.86 DE 3619587**

(43) Veröffentlichungstag der Anmeldung:
**16.12.87 Patentblatt 87/51**

(45) Bekanntmachung des Hinweises auf die
Patenterteilung:
**22.05.91 Patentblatt 91/21**

(84) Benannte Vertragsstaaten:
**ES FR GB IT**

(56) Entgegenhaltungen:
**DE-A- 2 940 174**
**DE-A- 3 030 911**
**DE-A- 3 108 008**
**DE-A- 3 150 772**
**DE-A- 3 220 399**

(73) Patentinhaber: **SWF Auto-Electric GmbH**
**Stuttgarter Strasse 119 Postfach 135**
**W-7120 Bietigheim-Bissingen(DE)**

(72) Erfinder: **Erdelitsch, Herbert**
**Berliner Strasse 8**
**W-7120 Bietigheim-Bissingen(DE)**
Erfinder: **Machalitzky, Otto**
**Frimleystrasse 50/2**
**W-7120 Bietigheim-Bissingen(DE)**
Erfinder: **Prang, Josef-Elmar**
**Frimleystrasse 60**
**W-7120 Bietigheim-Bissingen(DE)**

## Beschreibung

Die Erfindung betrifft einen elektrischen Schalter zur Ansteuerung eines Elektromotors einer insbesondere für Fahrzeuge verwendeten Scheibenwischeranlage, welcher die im Oberbegriff des Anspruchs 1 aufgeführten Merkmale aufweist.

Ein derartiger Schalter ist aus der DE-A- 32 20 399 bekannt. Der Schalter ist, läßt man eine selbstrückstellunde Schaltstellung außer acht, ausgehend von einer Parkstellung durch Verschwenken eines Schalthebels in drei hintereinanderliegende Betriebsstellungen einstellbar. Die erste Betriebsstellung entspricht dabei einer Intervallbetriebsart, in welcher ein von Pausen unterbrochener Betrieb mit kleiner Wischgeschwindigkeit bewirkt wird. Die darauf folgende Betriebsstellung entspricht einer ersten Dauerbetriebsart, in welcher ein ununterbrochener Betrieb mit kleiner Wischgeschwindigkeit bewirkt wird und die darauffolgende einer zweiten Dauerbetriebsart in welcher ein ununterbrochener Betrieb mit großer Wischgeschwindigkeit bewirkt wird. Die den beiden Dauerbetriebsarten zugeordneten Festkontakte befinden sich dabei hintereinanderliegend auf einer ersten Kontaktbahn, während die der Intervallbetriebsart zugeordneten Festkontakte auf die erste und eine zweite, neben der ersten Kontaktbahn liegende Kontaktbahn verteilt sind. Die auf der ersten Kontaktbahn befindlichen Festkontakte können dabei paarweise von einer ersten Kontaktbrücke und die auf der zweiten Kontaktbahn befindlichen Festkontakte paarweise von einer zweiten Kontaktbrücke beaufschlagt werden. Außer den genannten Betriebsarten ist mit dem elektrischen Schalter nach der DE-A- 32 20 399 der Scheibenwischermotor auch in einer Tippwischbetriebsart steuerbar, wenn man den Schalthebel in die selbstrückstellende Schaltstellung bringt.

Die DE-A- 32 20 399 zeigt nun auch eine solche Anordnung der Festkontakte und eine solche Ausbildung der beiden Kontaktbrücken, daß der Motorstrom im Tippwischbetrieb und im Intervallbetrieb über die eine und im Dauerbetrieb mit großer oder kleiner Wischgeschwindigkeit über die andere Kontaktbrücke fließt. Damit ist die Belastung der Kontaktbrücken mit dem Motorstrom, über die einzelnen Betriebsarten hinweg gesehen, besser verteilt als bei einer Ausführung, bei der der Motorstrom außer im Dauerbetrieb auch im Tippwischbetrieb und/oder im Intervallbetrieb über dieselbe Kontaktbrücke fließt.

Allerdings wird innerhalb einer Betriebsart eine Kontaktbrücke jeweils mit dem gesamten Motorstrom belastet, so daß die Gefahr, daß wegen einer Beschädigung der Kontaktbrücke oder der Festkontakte eine oder mehrere Betriebsarten ausfallen, nicht ganz ausgeschlossen werden kann.

Aufgabe der Erfindung ist es, einen elektrischen Schalter mit den Merkmalen aus dem Oberbegriff des Anspruchs 1 so weiterzuentwickeln, daß auf einfache und kostengünstige Weise seine Betriebssicherheit erhöht wird.

Diese Aufgabe wird erfindungsgemäß dadurch gelöst, daß man einen elektrischen Schalter außer mit den Merkmalen aus dem Oberbegriff mit denen aus dem kennzeichnenden Teil des Anspruchs 1 ausstattet.

Bei einem erfindungsgemäßen elektrischen Schalter werden zwei Kontaktbrücken in zumindest einer Dauerbetriebsart parallel zueinander geschaltet, so daß in dieser Betriebsart die Belastung zwischen den Kontaktbrücken und den zugehörigen Kontaktstellen aufgeteilt ist und eine hohe Betriebssicherheit gewährleistet ist. Um dies zu erreichen, werden auf einfache Weise die für den Intervallbetrieb ohnehin notwendigen zwei Kontaktbrücken benutzt.

Vorteilhafte Ausgestaltungen eines erfindungsgemäßen elektrischen Schalters kann man den Unteransprüchen entnehmen.

So ist die Parallelschaltung der Kontaktbrücken besonders günstig, wenn gemäß Anspruch 2 der Motorstrom über sie fließen soll.

Wenn der Schalter, wie an sich üblich, Schaltstellungen für Dauerbetrieb mit kleiner und großer Wischgeschwindigkeit besitzt, wird empfohlen, die erfindungsgemäße(n) Maßnahme(n) für die Betriebsart mit kleiner Wischgeschwindigkeit vorzusehen, weil diese erfahrungsgemäß öfter als die große Wischgeschwindigkeit benötigt wird.

Wenn der Schalter auch eine Schaltstellung für Tippwischbetrieb besitzt, die erfahrungsgemäß ebenfalls häufig benötigt wird, wird empfohlen, die erfindungsgemäße(n) Maßnahme(n) auch für diese Betriebsart vorzusehen. Dabei können, wenn die Schaltstellung für Tippwischbetrieb neben der Schaltstellung für Dauerbetrieb mit kleiner Wischgeschwindigkeit liegt, die gleichen Festkontakte genutzt werden.

Durch die in Anspruch 5 aufgeführte Maßnahme wird erreicht, daß der Elektromotor beim Umschalten von der kleinen auf die große Wischgeschwindigkeit nicht ausgeschaltet wird und der oder die Scheibenwischer demgemäß nicht dazwischen stehenbleiben. Damit wird eine Irritation der Bedienungsperson vermieden.

In den Ansprüchen 6 bis 10 sind konkrete Ausführungsformen und Schaltfolgen erfindungsgemäßer Schalter angegeben. Die dazu nötige Vielzahl von Festkontakten verteuert dabei den Schalter nicht, wenn er gemäß Anspruch 12 oder 13 weitergebildet ist.

Durch die in Anspruch 11 aufgeführte Maßnahme kann die Betriebssicherheit des Schalters noch weiter erhöht werden.

Ausführungsbeispiele erfindungsgemäßer elektrischer Schalter werden nachstehend anhand einer Zeichnung näher erläutert. Dabei ist dargestellt in

Fig. 1 ein dem stand der Technik gemäßes Schema zur Ansteuerung eines Elektromotors einer Scheibenwischeranlage für Fahrzeuge, in

Fig. 2 eine Ansicht auf die Grundplatte eines ersten Ausführungsbeispiels, in

Fig. 3 das Schaltglied des Schalters nach Fig. 2 in Ansicht von oben, in

Fig. 4 das Kontaktschema des ersten Schalters, in

Fig. 5 das Kontakt- und Leiterbahnenschema eines zweiten Ausführungsbeispiels, in

Fig. 6 eine andere Darstellung des in Fig. 5 gezeigten Kontaktschemas und in

Fig. 7 eine Gegenüberstellung der Anschlußbetätigungen der beiden Ausführungsbeispiele in den verschiedenen Schaltstellungen.

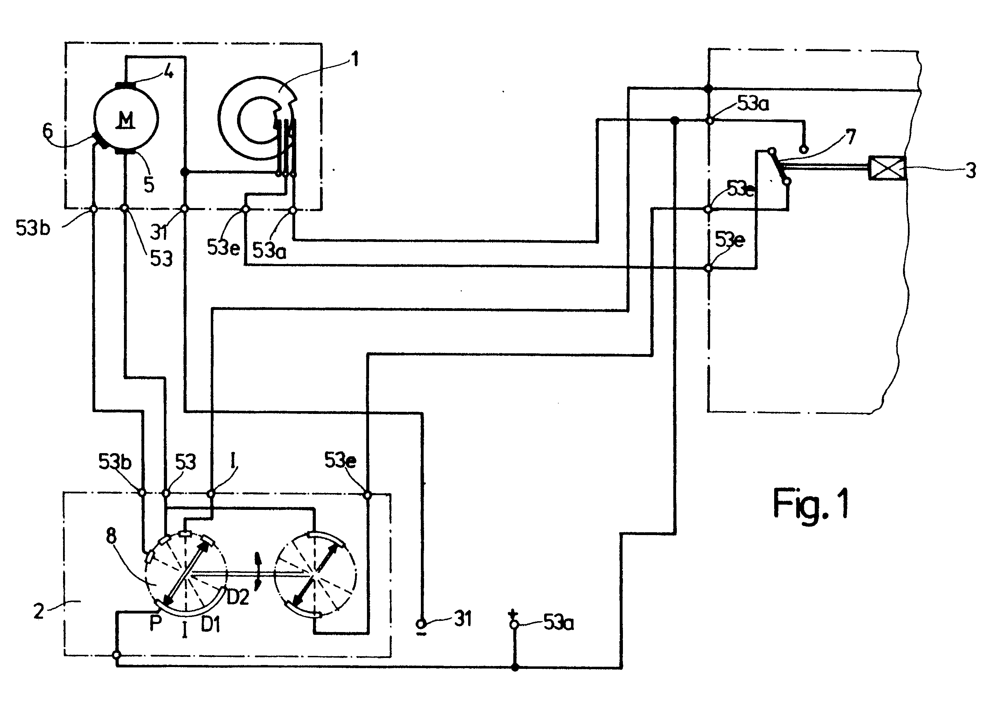

Bei dem in Fig. 1 dargestellten Schaltschema ist mit M der nach Art eines Kurzschlußmotors arbeitende Elektromotor einer Scheibenwischeranlage für Kraftfahrzeuge, mit 1 dessen Parkstellscheibe und mit 2 dessen Schalter und mit 3 dessen Relais bezeichnet. Mit 31 ist der Minuspol der Spannungsquelle und mit 53a der Pluspol der Spannungsquelle bezeichnet.

Der Elektromotor M ist auf bekannte Weise an einer ersten Bürste 4 über eine Anschlußklemme an den Minuspol 31 der Spannungsquelle angeschlossen, welche der Übersichtlichkeit wegen wie der Minuspol mit dem Bezugzeichen 31 gekennzeichnet ist. Über die Anschlußklemme 31 ist er auch mit seiner Parkstellscheibe 1 verbunden. Die Parkstellscheibe 1 ist auf bekannte Weise über eine Anschlußklemme an den Pluspol 53a der Spannungsquelle anschließbar, welche der übersichtlichkeit wegen wie der Pluspol mit dem Bezugzeichen 53a gekennzeichnet ist. Über eine mit 53e gekennzeichnete Anschlußklemme der Parkstellscheibe 1 ist der Elektromotor M dauernd mit dem Relais 3 verbunden. Außerdem ist er über die Anschlußklemme 53a mittels der Parkstellscheibe 1 mit dem Relais 3 verbindbar.

Weiterhin ist der Elektromotor M auf bekannte Weise an zwei weiteren Bürsten 5 und 6 über zwei Anschlußklemmen 53 und 53b an zwei Anschlußklemmen des Schalters 2 angeschlossen, welche der Übersichtlichkeit wegen mit den gleichen Bezugzeichen wie diejenigen des Elektromotors H gekennzeichnet sind. Den Anschlußklemmen 53 ist dabei eine erste Dauerbetriebsart DI zugeordnet, in welcher der Elektromotor M die Scheibenwischeranlage mit einer kleinen Wischgeschwindigkeit betreibt. Den Anschlußklemmen 53b ist eine zweite Dauerbetriebsart D2 zugeordnet, in welcher der Elektromotor M die Scheibenwischeranlage mit einer großen Wischgeschwindigkeit betreibt.

Der Schalter 2 besitzt eine weitere Anschlußklemme I, über welche er auf bekannte, nicht näher dargestellte Weise mit dem Relais 3 verbunden ist, welches wiederum auf bekannte Weise über eine Schaltbrücke 7 mit den Anschlußklemmen 53e des Schalters 2 und den Anschlußklemmen 53a und 53e der Parkstellscheibe 1 gekoppelt ist und mit nicht dargestellten zeitabhängig schaltenden elektrischen Bauelementen verbunden ist. Der Anschlußklemme I ist eine Intervallbetriebsart 1 des Elektromotors M zugeordnet. In der Intervallbetriebsart 1 betreibt der Elektromotor M die Scheibenwischeranlage, von Pausen unterbrochen, mit kleiner Wischgeschwindigkeit.

Der Schalter 2 ist derart aufgebaut, daß er manuell mittels eines als Drehknopf 8 ausgebildeten Betätigungsorgans nach dessen Drehung im Gegenuhrzeigersinn ausgehend von einer Parkstellung P nacheinander die Intervallbetriebsart I, die Dauerbetriebsart D1 und die Dauerbetriebsart D2 schalten kann.

Der Schalter 2 besitzt dabei ein nicht dargestelltes Schaltglied mit zwei Kontaktbrücken, von denen die erste mit auf einer ersten Kontaktbahn angeordneten Festkontakten zusammenwirkt, welche den Anschlußklemmen 53a, 53b, 53 und 1 zugeordnet sind. Die zweite Kontaktbrücke wirkt mit auf einer zweiten, parallel oder konzentrisch zur ersten Kontaktbahn verlaufenden Kontaktbahn angeordneten Festkontakten 53 und 53e zusammen. Mit der ersten Kontaktbrücke können somit die Dauerbetriebsart D1 mit kleiner Wischgeschwindigkeit und die Dauerbetriebsart D2 mit großer Wischgeschwindigkeit geschaltet werden, während mit der zweiten Kontaktbrücke nur die Intervallbetriebsart 1 geschaltet werden kann.

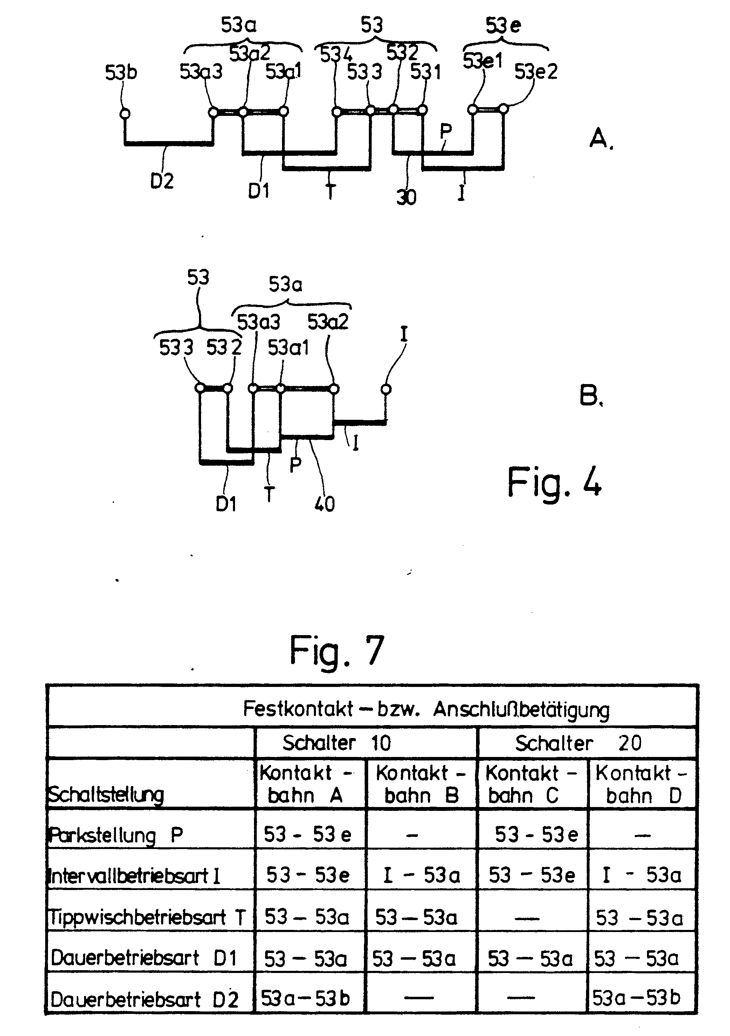

Mit den erfindungsgemäßen Schaltern 10 und 20 (Fig. 3 bis 6) können wie mit dem zuvor beschriebenen Schalter 2 eine erste Dauerbetriebsart D1 mit kleiner Wischgeschwindigkeit, eine zweite Dauerbetriebsart D2 mit großer Wischgeschwindigkeit sowie eine Intervallbetriebsart I geschaltet werden.

Die genannten Betriebsarten sind in den Schaltern auf bekannte Weise über Raststellungen des Schaltgliedes schaltbar. Zusätzlich kann mit den erfindungsgemäßen Schaltern 10 und 20 noch eine Tippwischbetriebsart T geschaltet werden, bei welcher die Wischer so lange mit kleiner Wischgeschwindigkeit laufen, wie das Betätigungsorgan manuell in der der Tippwischbetriebsart T entsprechenden Position gehalten wird. In der Tippwischbetriebsart T befindet sich das Schaltglied nicht in einer Raststellung.

Die erfindungsgemäßen Schalter 10 und 20 besitzen wie der zuvor beschriebene Schalter 2 zwei Kontaktbrücken 30 und 40 bzw. 50 und 60. Die erste Kontaktbrücke 30 bzw. 50 bewirkt mit Festkontakten auf einer ersten Kontaktbahn A bzw. C zusammen. Über die erste Kontaktbrücke 30 des Schalters 10 kann die Dauerbetriebsart D1, die Dauerbetriebsart D2 und die Tippwischbetriebsart T geschaltet werden. Über die erste Kontaktbrücke 50 des Schalters 20 kann die Dauerbetriebsart D1 und die Dauerbetriebsart D2 geschaltet werden.

Die zweite Kontaktbrücke 40 bzw. 60 wirkt mit Festkontakten auf der zweiten Kontaktbahn B bzw. D zusammen. Über die zweite Kontaktbrücke 60 des Schalters 20 kann die Tippwischbetriebsart geschaltet werden.

In der Intervallbetriebsart schließlich verbindet die Kontaktbrücke 30 bzw. 50 die Anschlußklemmen 53 und 53e und die Kontaktbrücke 40 bzw. 60 die Anschlußklemmen I und 53a. Die Intervallbetriebsart wird also über beide Kontaktbrücken 30 und 40 bzw. 50 und 60 geschaltet.

Erfindungsgemäß ist aber über die zweite Kontaktbrücke 40 bzw. 60 und die Festkontakte der zugeordneten zweiten Kontaktbahn B bzw. D neben der Intervallbetriebsart 1 in wenigstens einer Schaltstellung auch eine Dauerbetriebsart, nämlich die Dauerbetriebsart D1 mit kleiner Wischgeschwindigkeit schaltbar. Dadurch weisen die erfindungsgemäßen Schalter 10 und 20 eine hohe Betriebssicherheit auf. Wenn nämlich bei dem Schalter 2 aus Figur 1 ein der Dauerbetriebsart D1 zugeordneter Festkontakt oder die entsprechende Kontaktbrücke ausfällt, ist die Dauerbetriebsart D1 nicht mehr schaltbar. Da bei den erfindungsgemäßen Schaltern 10 und 20 zum Schalten der Dauerbetriebsart D1 auch Festkontakte der zweiten Kontaktbahn B bzw. D ausgenutzt werden, ist diese Gefahr wesentlich verringert. Die Gefahr, daß sowohl auf der ersten Kontaktbahn A bzw. C und auf der zweiten Kontaktbahn B bzw. D gleichzeitig ein der Dauerbetriebsart D1 zugeordneter Defekt auftritt, ist unwahrscheinlich.

Bei den erfindungsgemäßen Schaltern 10 und 20 sind über die ersten Kontaktbrücken 30 und 50 und Festkontakte der zugeordneten ersten Kontaktbahn A, C die Dauerbetriebsart D1, D2 der Scheibenwischeranlage über einen ersten Stromkreis zwischen Spannungsquelle und Elektromotor schaltbar und über die zweite Kontaktbrücken 40 und 60 in der Schaltstellung für die Dauerbetriebsart D1 ein zum ersten Stromkreis paralleler Stromkreis zwischen Spannungsquelle und Elektromotor schaltbar. Somit ist in der Dauerbetriebsart D1 die Strombelastung pro Kontaktstelle nur halb so hoch wie üblich, so daß die Gebrauchsdauer der in der Dauerbetriebsart D1 beaufschlagten Festkontakte theoretisch doppelt so groß wie üblich ist.

Konstruktiv ist die Parallelschaltung durch die Beaufschlagung beider Kontaktbrücken 30 und 40 bzw. 50 und 60 in der Dauerbetriebsart D1 mit Strom realisiert.

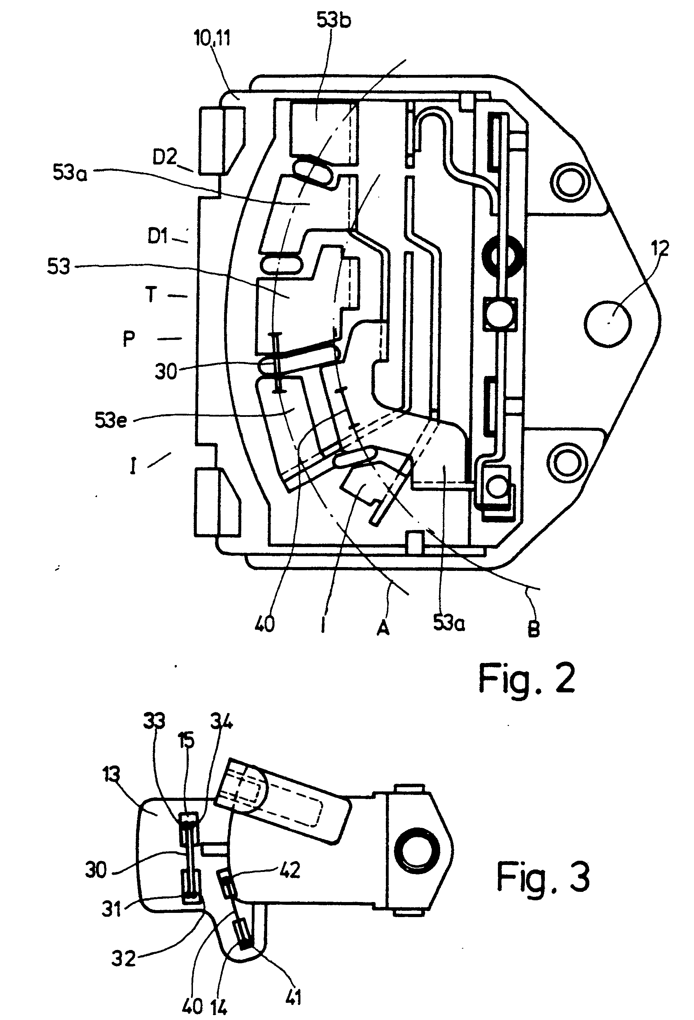

Nachfolgend werden zunächst weitere Einzelheiten eines erfindungsgemäßen Schalters 10 anhand der Fig. 2,3,4 und 7 beschrieben.

Der Schalter 10 besitzt auf einer Grundplatte 11 aus Kunststoff zwei Kontaktbahnen A und B. Die Kontaktbahnen A und B verlaufen konzentrisch mit dem Punkt 12 auf der Grundplatte 11, um den das Schaltglied 13 drehbar gelagert ist. Das Schaltglied 13 besitzt zwei gleich lange Kammern 14 und 15 zur Aufnahme zweier gleich langer Kontaktbrücken 30,40. Die in der Kammer 15 befindliche Kontaktbrücke 30 ist dabei entlang ihrer Längsmittelebene hochkant unterteilt. Sie besitzt somit an beiden Enden jeweils zwei Kontaktstellen 31 und 32 bzw. 33 und 34. Man könnte sie deswegen als Doppelkontaktbrücke bezeichnen. Aufgrund dieser Ausbildung ist die Betriebssicherheit der Kontaktbrücke 30 hoch, da es unwahrscheinlich ist, daß sich zwei am gleichen Ende befindliche Kontaktstellen 31 und 32 oder 33 und 34 gleichzeitig gleich stark abnutzen. Es ist davon auszugehen, daß eine von den Kontaktstellen länger als die andere funktionsfähig bleibt. Die Gebrauchsdauer der Kontaktbrücke 30 ist somit gegenüber üblichen Kontaktbrücke erhöht. Die andere Kontaktbrücke 40 ist wie herkömmlich ausgebildet und besitzt an beiden Enden jeweils eine Kontaktstelle 41,42. Für den vorliegenden Anwendungsfall genügt das, weil die Kontaktbrücke 40, wie nachfolgend erläutert wird, geringere Aufgaben als die Kontaktbrücke 30 zu erfüllen hat.

Das Schaltglied 13 des Schalters 10 kann, wie in Fig. 2 angedeutet, mittels eines nicht dargestellten Schalthebels ausgehend von einer Parkstellung P durch Drehung um den Punkt 12 in eine erste Richtung nacheinander in drei verschiedene Stellungen gebracht werden. Die erste Stellung bewirkt dabei die Tippwischbetriebsart T, die zweite die Dauerbetriebsart D1 mit kleiner Wischgeschwindigkeit und die dritte die Dauerbetriebsart D 2 mit großer Wischgeschwindigkeit. Weiterhin kann das Schaltglied 13 ausgehend von der Parkstellung P durch Drehung um den Punkt 12 in eine zweite Richtung in eine Stellung gebracht werden, welche die Intervallbetriebsart 1 bewirkt.

Der Schalter 10 besitzt, wie die Fig. 2 und 4 zeigen, auf der ersten, äußeren Kontaktbahn A vier aus einer Blechplatine ausgestanzte Festkontakte 53e, 53, 53a und 53b, welche zu den Anschlüssen 53e, 53, 53a und 53b gehören und zehn Kontaktpunkte 53e2, 53e1, 531, 532, 533, 534, 53a1, 53a2, 53a3 und 53b besitzen. Der Kontaktpunkt 53b ist dabei Teil des Festkontakts 53b und damit des Anschlusses 53b. Die Kontaktpunkte 53a3, 53a2 und 53a1 sind Teil des Festkontakts 53a und damit des Anschlusses 53a. Die Kontaktpunkte 534, 533, 532 und 531 sind Teil des Festkontakts 53 und damit des Anschlusses 53. Die Kontaktpunkte 53e2 und 53e1 sind Teil des Festkontakts 53e und damit des Anschlusses 53e.

Auf der zweiten, inneren Kontaktbahn 8 besitzt der Schalter 10 drei aus einer Blechplatine ausgestanzte Festkontakte I, 53a und 53, welche zu den Anschlüssen I, 53a und 53 gehören und sechs Kontaktpunkte 1, 53a2, 53a1, 53a3, 532 und 533. Die Kontaktpunkte 533 und 532 sind Teil des Festkontakts 53 und damit des Anschlusses 53. Die Kontaktpunkte 53a3, 53a1 und 53a2 sind Teil des Festkontakts 53a und damit des Anschlusses 53a. Der Kontaktpunkt 1 ist Teil des Festkontakts 1 und damit Teil des Anschlusses 1.

Die Festkontakte 53 und 53a sind somit auf beiden Kontaktbahnen A und B vorhanden. Der Festkontakt 53e ist mit der Parkstellungsscheibe 1 (Fig. 1) gekoppelt. Der Festkontakt 53 ist an die die Dauerbetriebsart D1 mit kleiner Wischgeschwindigkeit bewirkende Bürste 5 des Elektromotors M angeschlossen. Der Festkontakt 53a ist an den Pluspol 53a der Spannungsquelle angeschlossen. Der Festkontakt 53b ist an die die Dauerbetriebsart D2 mit großer Wischgeschwindigkeit bewirkende Bürste 6 des Elektromotors M angeschlossen.

Die auf der ersten Kontaktbahn A befindlichen Kontaktpunkte besitzen einen derartigen Abstand voneinander, daß jeweils zwei aufeinanderfolgende von der ersten Kontaktbrücke 30 beaufschlagt werden können. Die auf der zweiten Kontaktbahn 8 befindlichen Kontaktpunkte besitzen ebenfalls einen derartigen Abstand voneinander, daß jeweils zwei aufeinanderfolgende von der zweiten Kontaktbrücke 40 beaufschlagt werden können.

In der Parkstellung P liegt die erste Kontaktbrücke 30 dabei mit den Kontaktstellen 31 und 32 auf dem Kontaktpunkt 53e1 des Festkontakts 53e und mit den Kontaktstellen 33 und 34 auf dem Kontaktpunkt 531 des Festkontakts 53 der ersten, äußeren Kontaktbahn A auf, während die zweite Kontaktbrücke 40 mit der Kontaktstelle 41 auf dem Kontaktpunkt 53a2 des Festkontakts 53a und mit der Kontaktstelle 42 auf dem Kontaktpunkt 53a1 des Festkontakts 53a der zweiten, inneren Kontaktbahn B aufliegt. Der Elektromotor M ist somit kurzgeschlossen und läuft nicht.

In der Schaltstellung für die Intervallbetriebsart I liegt die erste Kontaktbrücke 30 mit den Kontaktstellen 31 und 32 auf dem Kontaktpunkt 532 des Festkontakts 53 und mit den Kontaktstellen 33 und 34 auf dem Kontaktpunkt 53e2 des Festkontakts 53e der ersten äußeren Kontaktbahn A auf, während die zweite Kontaktbrücke 40 mit der Kontaktstelle 41 auf dem Kontaktpunkt 53a2 des Festkontakts 53a und mit der Kontaktstelle 42 auf dem Kontaktpunkt 1 des Festkontakts 1 der zweiten, inneren Kontaktbahn B aufliegt. Der Elektromotor M ist hier mit der Bürste 5 sowohl über die erste Kontaktbrücke 30 als auch über die zweite Kontaktbrücke 40 und über das Relais 3 mit der Spannungsquelle 31,53a elektrisch leitend verbunden. Der Elektromotor M und die Wischer laufen somit in der Intervallbetriebsart mit kleiner Wischgeschwindigkeit.

In der Schaltstellung für die Tippwischbetriebsart T liegt die erste Kontaktbrücke 30 mit den Kontaktstellen 31 und 32 auf dem Kontaktpunkt 53a1 des Festkontakts 53a und mit den Kontaktstellen 33 und 34 auf dem Kontaktpunkt 533 des Festkontakts 53 der ersten, äußeren Kontaktbahn A auf, während die zweite Kontaktbrücke 40 mit der Kontaktstelle 41 auf dem Kontaktpunkt 532 des Festkontakts 53 und mit der Kontaktstelle 42 auf dem Kontaktpunkt 53a1 der zweiten, inneren Kontaktbahn B aufliegt. Der Elektromotor M ist hier mit der Bürste 5 sowohl über die erste Kontaktbrücke 30 als auch über die zweite Kontaktbrücke 40 mit der Spannungsquelle 31, 53a elektrisch leitend verbunden. Der Elektromotor M und die Wischer laufen hier somit so lange in der Tippwischbetriebsart mit kleiner Wischgeschwindigkeit, wie der Schalthebel und damit das Schaltglied 13 in der Schaltstellung für die Tippwischbetriebsart T gehalten wird.

In der Schaltstellung für die Dauerbetriebsart D1 mit kleiner Wischgeschwindigkeit liegt die erste Kontaktbrücke 30 mit den Kontaktstellen 31 und 32 auf dem Kontaktpunkt 53a2 des Festkontakts 53a und mit den Kontaktstellen 33 und 34 auf dem Kontaktpunkt 534 des Festkontakts 53 der ersten, äußeren Kontaktbahn A auf, während die zweite Kontaktbrücke 40 mit der Kontaktstelle 41 auf dem Kontaktpunkt 533 des Festkontakts 53 und mit der Kontaktstelle 42 auf dem Kontaktpunkt 53a3 des Festkontakts der zweiten, inneren Kontaktbahn B aufliegt. Der Elektromotor M ist hier wie in der Schaltstellung für die Tippwischbetriebsart T mit der Bürste 5 sowohl über die erste Kontaktbrücke 30 als auch über die zweite Kontaktbrücke 40 mit der Spannungsquelle 31, 53a elektrisch leitend verbunden. Der Elektromotor M und die Wischer laufen hier somit so lange in der Dauerbetriebsart D1 mit kleiner Wischgeschwindigkeit, wie das Schaltglied 13 in der Raststellung für die Dauerbetriebsart D1 liegt.

In der Schaltstellung für die Dauerbetriebsart D2 mit großer Wischgeschwindigkeit liegt die Kontaktbrücke 30 mit den Kontaktstellen 31 und 32 auf dem Kontaktpunkt 53b des Festkontakts 53b und mit den Kontaktstellen 33 und 34 auf dem Kontaktpunkt 53a3 des Festkontakts 53a auf, während die Kontaktbrücke 40 mit den Kontaktstellen 41 und 42 auf dem Festkontakt 53a aufliegt. Der Elektromotor M ist hier nur über die erste Kontaktbrücke 30 an der Bürste 6 mit der Spannungsquelle 31, 53a elektrisch leitend verbunden. Es fließt ein höherer Strom als in der Schaltstellung für die Dauerbetriebsart D1 mit kleiner Wischgeschwindigkeit. Die Kontaktbrücke 30 wird somit hoch belastet. Ihre lange Gebrauchsdauer ist aber trotzdem gewährleistet, da sie, wie zuvor beschrieben, als Doppelkontaktbrücke ausgebildet ist. Der Elektromotor M und die Wischer laufen so lange in der Dauerbetriebsart D2 mit großer Wischgeschwindigkeit, wie das Schaltglied 13 in der Raststellung für die Dauerbetriebsart D2 liegt.

Insgesamt besitzt dieser Schalter 10 somit eine hohe Betriebssicherheit. Die zur Gewährleistung der hohen Betriebssicherheit nötige Vielzahl von Kontaktpunkten verteuert dabei den Schalter 10 gegenüber herkömmlichen Schaltern aber nicht, weil die Kontaktpunkte mit den Kontaktbahnen A und B auf einer mit Kunststoffmasse 11 umspritzten Leiterplatine angeordnet sind.

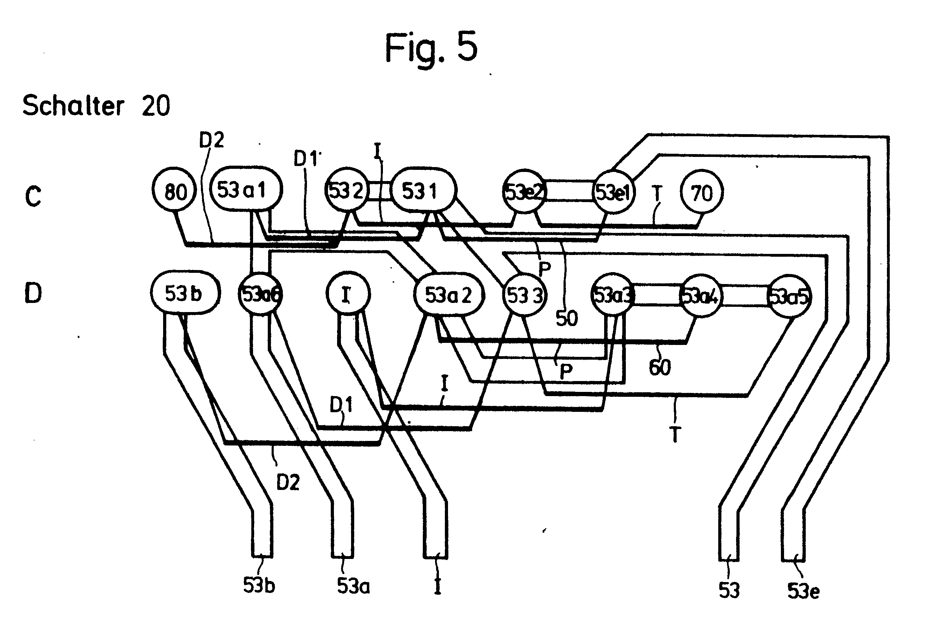

Nachfolgend werden weitere Einzelheiten des zweiten erfindungsgemäßen Schalters 20 anhand der Fig. 5, 6 und 7 beschrieben.

Der Schalter 20 besitzt, wie die Fig. 5 zeigt, auf der ersten Kontaktbahn C sieben Kontaktpunkte 70, 53e1, 53e2, 531, 532, 53a1 und 80. Die Kontaktpunkte 70 und 80 sind nicht an die Spannungsquelle angeschlossen, sondern Leerkontaktpunkte. Die Kontaktpunkte 53e1 und 53e2 liegen auf einem als Teil einer Leiterbahn ausgebildeten Festkontakt 53e, der zum Anschluß 53e der Scheibenwischeranlage führt. Die Kontakte 531 und 532 liegen auf einem als Leiterbahn ausgebildeten Festkontakt 53, der zum Anschluß 53 der Scheibenwischeranlage führt. Der Kontakt 53a1 liegt auf einem als Leiterbahn ausgebildeten Festkontakt 53a, der zum Anschluß 53a der Scheibenwischeranlage führt. Dabei sind die Kontaktpunkte 531 und 53a1 länglicher als die übrigen Kontaktpunkte 70, 53e1, 53e2, 532 und 80 ausgebildet.

Auf der zweiten Kontaktbahn D besitzt der Schalter 20 acht Kontaktpunkte 53a5, 53a4, 53a3, 533, 53a2, 1, 53a6 und 53b. Die Kontaktpunkte 53a5, 53a4, 53a3, 53a2 und 53a6 liegen auf einem als Leiterbahn ausgebildeten Festkontakt 53a, der zum Anschluß 53a der Scheibenwischeranlage führt. Der Kontaktpunkt 533 liegt auf einem als Leiterbahn ausgebildeten Festkontakt 53, der zum Anschluß 53 der Scheibenwischeranlage führt. Der Kontaktpunkt I liegt auf einem als Leiterbahn ausgebildeten Festkontakt 1, der zum Anschluß I der Scheibenwischeranlage führt. Der Kontaktpunkt 53b liegt auf einem als Leiterbahn ausgebildeten Festkontakt 53b, der zum Anschluß 53b der Scheibenwischeranlage führt. Dabei sind die Kontaktpunkte 53a und 53b länglicher als die übrigen Kontaktpunkte 53a5, 53a4, 53a3, 533, I und 53a6 ausgebildet.

Die Festkontakte 53 und 53a sind somit auf beiden Kontaktbahnen C und D vorhanden. Der Festkontakt 53e ist mit der Parkstellungsscheibe 1 (Fig. 1) gekoppelt. Der Festkontakt 53 ist an die die Dauerbetriebsart D1 mit kleiner Wischgeschwindigkeit bewirkende Bürste 5 des Elektromotors M angeschlossen. Der Festkontakt 53a ist an den Pluspol 53a der Spannungsquelle angeschlossen. Der Festkontakt 53b ist an die die Dauerbetriebsart D2 mit großer Wischgeschwindigkeit bewirkende Bürste 6 des Elektromotors M angeschlossen.

Die erste Kontaktbrücke 50 kann jeweils zwei durch einen Kontaktpunkt voneinander getrennte Kontaktpunkte beaufschlagen, die auf der ersten Kontaktbahn C angeordnet sind. Die zweite Kontaktbrücke 60 ist länger als die erste Kontaktbrücke 50 ausgebildet und kann jeweils zwei durch zwei Kontaktpunkte voneinander getrennte Kontaktpunkte beaufschlagen, die auf der zweiten Kontaktbahn D angeordnet sind.

Die Kontaktbrücken 50 and 60 können mittels eines nicht dargestellten Schaltgliedes und eines Schalthebels ausgehend von einer Parkstellung P durch Verschieben oder Verdrehen in eine erste Richtung nacheinander in drei verschiedene Stellungen gebracht werden. Die erste Stellung bewirkt dabei die Intervallbetriebsart 1, die zweite die Dauerbetriebsart D1 mit kleiner Wischgeschwindigkeit und die dritte die Dauerbetriebsart D2 mit großer Wischgeschwindigkeit. Weiterhin können die Kontaktbrücken 50 und 60 durch Verschieben oder Verdrehen in eine zweite Richtung in eine Stellung gebracht werden, welche die Tippwischbetriebsart 1 bewirkt.

In der Parkstellung P liegt die erste Kontaktbrücke 50 mittig auf dem zweiten Kontaktpunkt 53e1 und auf der rechten Hälfte des vierten Kontaktpunkts 531 der ersten Kontaktbahn C auf, während die zweite Kontaktbrücke 60 mittig auf den zweiten Kontaktpunkt 53a4 und auf der linken Hälfte des fünften Kontaktpunkts 53a2 der zweiten Kontaktbahn D aufliegt. Der Elektromotor ist somit kurzgeschlossen und läuft nicht.

In der Schaltstellung für die Tippwischbetriebsart 1 liegt die erste Kontaktbrücke 50 auf dem ersten, als Leerkontaktpunkt ausgebildeten Kontaktpunkt 70 und dem dritten Kontaktpunkt 53e2 der ersten Kontaktbohn C auf, während die zweite Kontaktbrücke 60 auf dem ersten Kontaktpunkt 53a5 und dem vierten Kontaktpunkt 533 der zweiten Kontaktbahn D aufliegt. Der Elektromotor M ist hier mit der Bürste 5 über die zweite Kontaktbrücke 60 mit der Spannungsquelle 31, 53a elektrisch leitend verbundcen. Der Elektromotor M und die Wischer laufen dann so lange in der Tippwischbetriebsart mit kleiner Wischgeschwindigkeit, wie der Schalthebel und damit das Schaltglied in der Schaltstellung für die Tippwischbetriebsart T gehalten wird.

In der Schaltstellung für die Intervallbetriebsart 1 liegt die erste Kontaktbrücke 50 auf dem dritten Kontaktpunkt 53e2 und dem fünften Kontaktpunkt 532 der ersten Kontaktbahn C auf, während die zweite Kontaktbrücke 60 auf dem dritten Kontaktpunkt 53a3 und dem sechsten Kontaktpunkt I der zweiten Kontaktbahn D aufliegt. Der Elektromotor M ist hier mit der Bürste 5 sowohl über die erste Kontaktbrücke 50 als auch über die zweite Kontaktbrücke 60 und über das Relais 3 mit der Spannungsquelle 31, 53a elektrisch leitend verbunden. Der Elektromotor M und die Wischer laufen somit in der Intervallbetriebsart mit kleiner Wischgeschwindigkeit.

In der Schaltstellung für die Dauerbetriebsart D1 mit kleiner Wischgeschwindigkeit liegt die erste Kontaktbrücke 50 auf der rechten Hälfte des vierten Kontaktpunkts 531 und auf der linken Hälfte des sechsten Kontaktpunkts 53a1 der ersten Kontaktbahn C auf, während die zweite Kontaktbrücke 60 auf dem vierten Kontaktpunkt 533 und auf dem siebten Kontaktpunkt 53a6 der zweiten Kontaktbahn D aufliegt. Der Elektromotor M ist hier wie in der Schaltstellung für die Tippwischbetriebsart T mit der Bürste 5 sowohl über die erste Kontaktbrücke 50 als auch über die zweite Kontaktbrücke 60 mit der Spannungsquelle 31, 53a elektrisch leitend verbunden. Der Elektromotor M und die Wischer laufen hier somit so lange in der Dauerbetriebsart D1 mit kleiner Wischgeschwindigkeit, wie das Schaltglied in der Raststellung für die Dauerbetriebsart D1 liegt.

In der Schaltstellung für die Dauerbetriebsart D2 mit großer Wischgeschwindigkeit liegt die erste Kontaktbrücke 50 auf dem fünften Kontaktpunkt 532 und auf dem achten, als Leerkontakt ausgebildeten Kontaktpunkt 80 der ersten Kontaktbahn C auf, während die zweite Kontaktbrücke 60 auf der linken Hälfte des fünften Kontaktpunkts 53a2 und auf der linken Hälfte des achten Kontaktpunkts 53b aufliegt. Der Elektromotor M ist hier nur über die zweite Kontaktbrücke 60 an der Bürste 6 mit der Spannungsquelle 31, 53a elektrisch leitend verbunden. Es fließt ein höherer Strom über die Kontaktbrücke als in der Schaltstellung für die Dauerbetriebsart D1 mit kleiner Wischgeschwindigkeit. Der Elektromotor M und die Wischer laufen zum einen in der Dauerbetriebsart D2 mit großer Wischgeschwindigkeit, wenn das Schaltglied in der Raststellung für die Dauerbetriebsart D2 liegt. Zum anderen laufen sie beim Umschalten von der Dauerbetriebsart D1 mit kleiner Wischgeschwindigkeit in die Dauerbetriebsart D2 mit großer Wischgeschwindigkeit mit kleiner Wischgeschwindigkeit weiter, weil die erste Kontaktbrücke 50 dann noch den vierten Kontaktpunkt 531 und den sechsten Kontaktpunkt 53a1 überstreicht, bis die zweite Kontaktbrücke 60 den fünften Kontaktpunkt 53a2 und den achten Kontaktpunkt 53b berührt. Das ist der Fall, weil diese Kontaktpunkte 531, 53a1, 53a2 und 53b, wie zuvor beschrieben, länglich ausgebildet und außerdem in der Lage derart auf die Längen und Raststellungen der Kontaktbrücken 50 und 60 abgestimmt sind, daß diese Kontaktüberdeckung möglich ist. Beim Umschalten von der Dauerbetriebsart D2 mit großer Wischgeschwindigkeit in die Dauerbetriebsart D1 mit kleiner Wischgeschwindigkeit laufen der Elektromotor M und die Wischer mit großer Wischgeschwindigkeit weiter, weil die zweite Kontaktbrücke 60 noch den achten Kontaktpunkt 53b und den fünften Kontaktpunkt 53a2 überstreicht, bis die erste Kontaktbrücke 50 den sechsten Kontaktpunkt 53a1 und den vierten Kontaktpunkt 531 berührt. Es findet somit weder beim Umschalten von der Schaltstellung für die Dauerbetriebsart D1 mit kleiner Wischgeschwindigkeit in die Schaltstellung für die Dauerbetriebsart D2 mit großer Wischgeschwindigkeit als auch umgekehrt eine Unterbrechung des Stromflusses und damit des Wischerbetriebes statt, die den Betreiber der Scheibenwischeranlage irritieren könnte. Außerdem ist dadurch die zum Induzieren der Dauerbetriebsart D2 mit großer Wischgeschwindigkeit nötige Einschaltspannung geringer als üblich, was sich ebenfalls positiv auf die Gebrauchsdauer des Schalters auswirkt.

Dieser Vorteil ist dabei preiswert realisiert, weil die Kontaktpunkte Teil von auf Leiterbahnen angeordneten Anschlüssen 53e, 53, 1, 53a und 53b sind, die sich auf einer umspritzten Platine befinden.

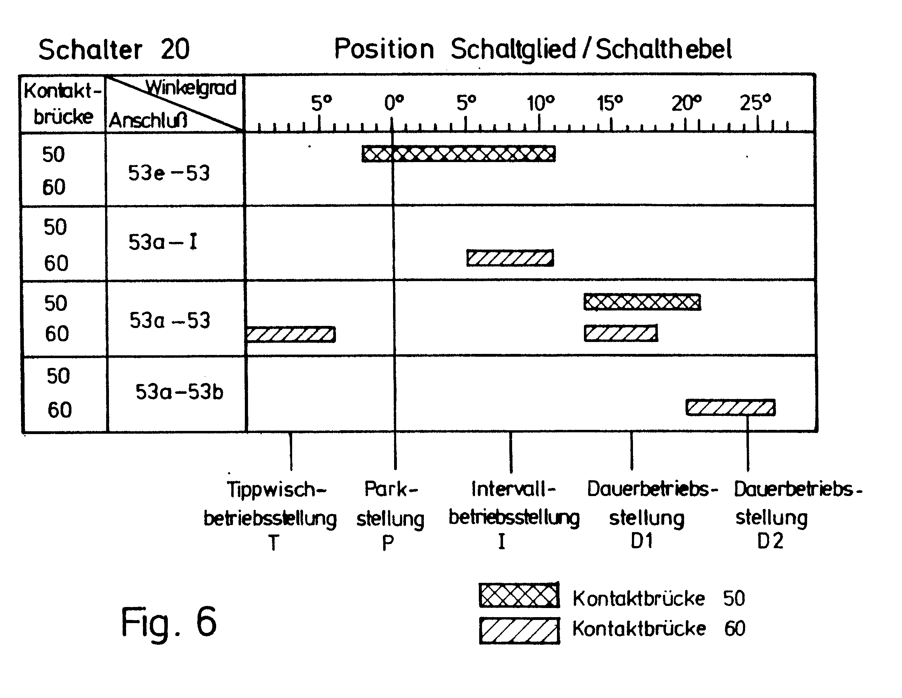

Aus Fig. 6 ist ersichtlich, welche Positionen die einzelnen Kontaktbrücken 50 und 60 während des Schaltens einnehmen. Wie Zeile 3 von oben zeigt, findet bei einer Verdrehung des Schalthebels und des Schaltgliedes von der Parkstellung P um 13 bis 18 Winkelgrad die Kontaktüberdeckung statt.

**Ansprüche**

1. Elektrischer Schalter zur Ansteuerung eines Elektromotors einer insbesondere für Fahrzeuge verwendeten Scheibenwischeranlage aus einer Spannungsquelle mit einem manuell in mehrere Schaltstellungen für Dauerbetriebsarten sowie eine Intervallbetriebsart der Scheibenwischeranlage einstellbaren Schaltglied (13) mit zwei Kontaktbrücken (30, 40; 50, 60), von denen die erste (30; 50) mit Festkontakten (53e, 53, 53a, 53b; 53e, 53, 53a) auf einer ersten Kontaktbahn (A; C) und die zweite (40; 60) mit Festkontakten (I, 53a, 53; 53a, 53, I, 53b) auf einer zweiten Kontaktbahn (B; D) zusammenwirkt, wobei in der der Intervallbetriebsart entsprechenden Schaltstellung des Schaltglieds (13) über die beiden Kontaktbrücken (30, 40; 50, 60) unterschiedliche Stromkreise schaltbar sind, dadurch gekennzeichnet, daß in wenigstens einer einer Dauerbetriebsart (D1) entsprechenden Schaltstellung des Schaltglieds (13) die beiden Kontaktbrücken (30, 40; 50, 60) elektrisch parallel zueinander in denselben Stromkreis schaltbar sind.

2. Elektrischer Schalter nach Anspruch 1, dadurch gekennzeichnet, daß die beiden Kontaktbrücken (30, 40; 50, 60) elektrisch parallel zueinander in einen Stromkreis zwischen Spannungsquelle (31, 53a) und Elektromotor (M) schaltbar sind.

3. Elektrischer Schalter nach Anspruch 2, dadurch gekennzeichnet, daß das Schaltglied (13) in eine Schaltstellung für eine Dauerbetriebsart (D1) mit kleiner und in eine Schaltstellung für eine Dauerbetriebsart (D2) mit großer Wischgeschwindigkeit verstellbar ist und daß die beiden Kontaktbrücken (30, 40; 50, 60) in der Schaltstellung für die Dauerbetriebsart (D1) mit kleiner Wischgeschwindigkeit elektrisch parallel zueinander schaltbar sind.

4. Elektrischer Schalter nach Anspruch 2 oder 3, dadurch gekennzeichnet, daß das Schaltglied (13) in eine Schaltstellung für eine Tippwischbetriebsart (T) der Scheibenwischeranlage verstellbar ist und daß die beiden Kontaktbrücken (30, 40) in dieser Schaltstellung elektrisch parallel zueinander schaltbar sind.

5. Elektrischer Schalter nach einem der vorhergehenden Ansprüche, dadurch gekennzeichnet, daß das Schaltglied in Schaltstellungen für Dauerbetrieb (D1,D2) mit kleiner und großer Wischgeschwindigkeit verstellbar ist und daß über die erste Kontaktbrücke (50) und die Festkontakte (53,53a) der zugeordneten ersten Kontaktbahn (C) der Dauerbetrieb (D1) mit kleiner Wischgeschwindigkeit und über die zweite Kontaktbrücke (60) und die Festkontakte (53a,53b) der zugeordneten zweiten Kontaktbahn (D) der Dauerbetrieb (D2) mit großer Wischgeschwindigkeit einschaltbar ist und daß beim Umschalten des Schaltgliedes von der Schaltstellung für Dauerbetrieb (D1) mit kleiner auf den Dauerbetrieb (D2) mit großer Wischgeschwindigkeit beide Kontaktbrücken (50,60) kurzzeitig gleichzeitig auf den bei diesen Dauerbetriebsarten (D1,D2) ansteuerbaren Festkontakten (53,53a;53a,53b) aufliegen.

6. Elektrischer Schalter nach Anspruch 4, dadurch gekennzeichnet, daß das Schaltglied ausgehend von einer Parkstellung (P) in eine erste Richtung in eine Intervallbetriebsstellung (I) und in eine zweite Richtung nacheinander in eine Tippwischbetriebsstellung (T), eine erste Dauerbetriebsstellung (D1) mit kleiner Wischgeschwindigkeit und eine zweite Dauerbetriebsstellung (D2) mit großer Wischgeschwindigkeit verstellbar ist und daß die Kontaktbahnen (A,B) wenigstens annähernd parallel oder konzentrisch verlaufen und daß die erste Kontaktbahn (A) vier Festkontakte (53e,53,53a,53b) besitzt, von denen der zweite (53) und der dritte (53a) auch auf der zweiten Kontaktbahn (B) vorhanden ist und von denen jeweils zwei aufeinanderfolgende von der ersten Kontaktbrücke (30) zur Erzielung der Schaltstellungen (I,P,T,D1,D2) beaufschlagt werden können und von denen der erste (53e) mit einer Parkstellungsscheibe (1) gekoppelt ist, über welche er entweder an den Pluspol (53a) oder an den Minuspol (31) einer den Elektromotor (M) versorgenden Spannungsquelle angeschlossen werden kann und von denen der zweite (53) an die die Dauerbetriebsstellung (D1) mit kleiner Wischgeschwindigkeit bewirkende Bürste (5) des Elektromotors (M) angeschlossen ist und von denen der dritte (53a) an den Pluspol (53a) der Spannungsquelle angeschlossen ist und von denen der vierte (53b) an die die Dauerbetriebsstellung (D2) mit großer Wischgeschwindigkeit bewirkende Bürste (6) des Elektromotor (M) angeschlossen ist und daß die zweite Kontaktbahn (B) drei Festkontakte (I,53a,53) besitzt, von denen der erste (I) mit einem Zeitglied (3) wirkverbunden ist und der zweite (53a) dem dritten (53a) der ersten Kontaktbahn (A) und der dritte (53) dem zweiten der ersten Kontaktbahn (A) entspricht und von denen jeweils zwei aufeinanderfolgende von der zweiten Kontaktbrücke (40) zur Erzielung der Schaltstellungen (I,P,T,D1) beaufschlagt werden können.

7. Elektrischer Schalter nach Anspruch 6, dadurch gekennzeichnet, daß in der Parkstellung (P) die erste Kontaktbrücke (30) auf dem ersten Festkontakt (53e) der ersten Kontaktbahn (A), der dabei an den Minuspol (31) der Spannungsquelle angeschlossen ist, und auf dem zweiten Festkontakt (53) der ersten Kontaktbahn (A) aufliegt, während die zweite Kontaktbrücke (40) auf dem zweiten Festkontakt (53a) der zweiten Kontaktbahn (B) aufliegt und daß in der Intervallstellung (I) die erste Kontaktbrücke (30) auf dem ersten Festkontakt (53e) der ersten Kontaktbahn (A), der dabei nicht an den Minuspol (31) der Spannungsquelle angeschlossen ist und auf dem zweiten Festkontakt (53) der ersten Kontaktbahn (A) aufliegt, während die zweite Kontaktbrücke (40) auf dem ersten Festkontakt (I) der zweiten Kontaktbahn (B) und auf dem zweiten Festkontakt (53a) aufliegt und daß in der Tippwischbetriebsstellung (T) und in der Dauerbetriebsstellung (D1) mit kleiner Wischgeschwindigkeit die erste Kontaktbrücke (30) auf dem zweiten (53) und dem dritten (53a) Festkontakt der ersten Kontaktbahn (A) aufliegt, während die zweite Kontaktbrücke (40) auf dem zweiten (53a) und dem dritten (53) Festkontakt der zweiten Kontaktbahn (B) aufliegt und daß in der Dauerbetriebsstellung (D2) mit großer Wischgeschwindigkeit die erste Kontaktbrücke (30) auf dem dritten (53a) und vierten (53b) Festkontakt der ersten Kontaktbahn (A) aufliegt, während die zweite Kontaktbrücke (40) auf dem dritten Festkontakt (53a) der zweiten Kontaktbahn (B) aufliegt.

8. Elektrischer Schalter nach Anspruch 5, dadurch gekennzeichnet, daß das Schaltglied ausgehend von einer Parkstellung (P) in eine erste Richtung in eine Tippwischbetriebsstellung (T) und in eine zweite Richtung nacheinander in eine Intervallbetriebsstellung (I), eine erste Dauerbetriebsstellung (D1) mit kleiner Wischgeschwindigkeit und eine zweite Dauerbetriebsstellung (D2) mit großer Wischgeschwindigkeit verstellbar ist und daß die Kontaktbahnen (C,D) wenigstens annähernd parallel oder konzentrisch verlaufen und daß die erste Kontaktbahn (C) sieben Kontaktpunkte (70,53e1,53e2,531,532,53a1,80) besitzt, von denen die beiden äußeren (70,80) Leerkontakte sind und von denen der zweite (53e1) und der dritte (53e2) mit einer Parkstellungsscheibe (1) gekoppelt sind, über welche sie entweder an den Pluspol (53a) oder an den Minuspol (31) einer den Elektromotor (M) versorgenden Spannungsquelle angeschlossen werden können, und von denen der vierte (531) und der fünfte (532) an die die Dauerbetriebsart mit kleiner Wischgeschwindigkeit bewirkende Bürste (5) des Elektromotors (M) angeschlossen sind und von denen der sechste (53a1) an den Pluspol (53a) der Spannungsquelle angeschlossen ist und von denen jeweils zwei durch einen Kontaktpunkt voneinander getrennte von der ersten Kontaktbrücke (50) zur Erzielung von vier Schaltstellungen (T,P,I,D1) beaufschlagt werden können und daß die zweite Kontaktbahn (D) acht Kontaktpunkte (53a5, 53a4, 53a3, 533, 53a2,I,53a6,53b) besitzt, von denen der erste (53a5), der zweite (53a4), der dritte (53a3), der fünfte (53a2) und der siebte (53a6) an den Pluspol (53a) der Spannungsquelle angeschlossen sind und von denen der vierte (533) an die die Dauerbetriebsart mit kleiner Wischgeschwindigkeit bewirkende Bürste (5) des Elektromotors (M) angeschlossen ist und von denen der sechste (1) an ein Zeitglied (3) angeschlossen ist und von denen der achte (53b) an die die Dauerbetriebsart mit großer Wischgeschwindigkeit bewirkende Bürste (6) des Elektromotors (M) angeschlossen ist und von denen jeweils zwei durch zwei Kontaktpunkte voneinander getrennte von der zweiten Kontaktbrücke (60) zur Erzielung von fünf Schaltstellungen (T,P,I,D1,D2) beaufschlagt werden können.

9. Elektrischer Schalter nach Anspruch 8, dadurch gekennzeichnet, daß in der Parkstellung (P) die erste Kontaktbrücke (50) auf dem zweiten Kontaktpunkt (53e1) der ersten Kontaktbahn (C), der dabei nicht an den Pluspol (53a) der Spannungsquelle angeschlossen ist, und auf dem vierten Kontaktpunkt (531) der ersten Kontaktbahn (C) aufliegt, während die zweite Kontaktbrücke (60) auf dem zweiten (53a4) und dem fünften (53a2) Kontaktpunkt der zweiten Kontaktbahn (D) aufliegt und daß in der Tippwischbetriebsstellung (T) die erste Kontaktbrücke (50) auf dem ersten Leerkontakt (70) und auf dem dritten Kontaktpunkt (53e2) der ersten Kontaktbahn (C) aufliegt, während die zweite Kontaktbrücke (60) auf dem ersten (53a5) und vierten Kontaktpunkt (533) der zweiten Kontaktbahn (D) aufliegt und daß in der Intervallbetriebsstellung (I) die erste Kontaktbrücke (50) auf dem dritten Kontaktpunkt (53e2), der dabei an den Pluspol (53a) der Spannungsquelle angeschlossen ist, und auf dem fünften (532) Kontaktpunkt der ersten Kontaktbahn (C) aufliegt, während die zweite Kontaktbrücke (60) auf dem dritten (53a3) und sechsten (1) Kontaktpunkt der zweiten Kontaktbahn (D) aufliegt und daß in der Dauerbetriebsstellung (D1) mit kleiner Wischgeschwindigkeit die erste Kontaktbrücke (50) auf dem vierten (531) und sechsten (53a1) Kontaktpunkt der ersten Kontaktbahn (C) aufliegt, während die zweite Kontaktbrücke (60) auf dem vierten (533) und siebten (53a6) Kontaktpunkt der zweiten Kontaktbahn (D) aufliegt und daß beim Übergang von der Dauerbetriebsstellung (D1) mit kleiner Wischgeschwindigkeit in die Dauerbetriebsstellung (D2) mit großer Wischgeschwindigkeit die erste Kontaktbrücke (50) so lange auf dem vierten (531) und sechsten (53a1) Kontaktpunkt der ersten Kontaktbahn (C) aufliegt, bis die zweite Kontaktbrücke (60) auf dem fünften (53a2) und achten (53b) Kontaktpunkt der zweiten Kontaktbahn (D) aufliegt und daß die erste Kontaktbrücke (50) dann auf dem fünften Kontaktpunkt (532) und dem zweiten Leerkontakt (80) der ersten Kontaktbahn (C) aufliegt.

10. Elektrischer Schalter nach Anspruch 8 und 9, dadurch gekennzeichnet, daß der vierte Kontaktpunkt (531) der ersten Kontaktbahn (C) eine in Richtung des fünften Kontaktpunkts (532) der ersten Kontaktbahn (C) weisende Verlängerung aufweist und daß der sechste Kontaktpunkt (53a1) der ersten Kontaktbahn (C) eine zum zweiten Leerkontakt (80) der ersten Kontaktbahn (C) weisende Verlängerung aufweist und daß der fünfte Kontaktpunkt (53a2) der zweiten Kontaktbahn (D) eine zum vierten Festkontakt (533) der zweiten Kontaktbahn (D) weisende Verlängerung aufweist und daß der achte Kontaktpunkt (53b) der zweiten Kontaktbahn (B) eine zum siebten Kontaktpunkt (53a6) der zweiten Kontaktbahn (D) weisende Verlängerung aufweist.

11. Elektrischer Schalter nach einem der vorhergehenden Ansprüche, dadurch gekennzeichnet, daß wenigstens eine (30) der Kontaktbrücken (30,40;50,60) als Doppelkontaktbrücke ausgebildet ist.

12. Elektrischer Schalter nach einem der vorhergehenden Ansprüche, dadurch gekennzeichnet, daß die Festkontakte (53,53e,53a,53b,l) und Kontaktbahnen (A,B;C,D) Teil einer aus Blech ausgestanzten Leiterplatine sind.

13. Elektrischer Schalter nach Anspruch 12, dadurch gekennzeichnet, daß die Festkontakte (53,53e,53a,53b,l) und Kontaktbahnen (C,D) Teil einer mit Kunststoff umspritzen Leiterplatine angeordnet sind.

**Claims**

1. An electric switch for energising from a voltage source an electric motor of a windscreen wiper system especially used for vehicles comprising a switching member (13) with two bridging contacts (30, 40; 50, 60) manually adjustable into several switching positions for continuous operation and one for intermittent operation of the windscreen wiper system, of which bridging contacts the first one (30; 50) co-operates with stationary contacts (53e, 53, 53a, 53b; 53e, 53, 53a) on a first contact path (A; C) and the second one (40; 60) with stationary contacts (l, 53a, 53; 53a, 53, 1, 53b) on a second contact path (B; D), wherein in the position of the switching member (13) corresponding to intermittent operation different circuits may be switched via the two bridging contacts (30, 40; 50, 60), characterised in that in at least one position of the switching member (13) corresponding to continuous operation (D1) the two bridging contacts (30, 40; 50, 60) may be connected in the same circuit in parallel to each other.

2. An electric switch according to claim 1, characterised in that the two bridging contacts (30, 40; 50, 60) may be connected in parallel to each other in a circuit between voltage source (31, 53a) and electric motor (M).

3. An electric switch according to claim 2, characterised in that the switching member (13) may be adjusted into an operating position for continuous operation (D1) with low wiper speed and into an operating position for continuous operation (D2) with high wiper speed and that the two bridging contacts (30, 40; 50, 60) may be electrically connected in parallel to each other in the operating position for continuous operation (D1) with low wiper speed.

4. An electric switch according to claim 2 or 3, characterised in that the switching member (13) may be adjusted into an operating position for tip-wiper operation (1) of the windscreen wiper system and that in this operating position the two bridging contacts (30, 40) may be connected in parallel to each other.

5. An electric switch according to one of the preceding claims, characterised in that the switching element may be changed over into operating positions for continuous operation (D1, D2) with low and high wiper speed and that continuous operation with low wiper speed may be switched on via the first bridging contact (50) and the stationary contacts (53, 53a) of the associated first contact path (C) and continuous operation (D1) with low wiper speed via the second bridging contact (60) and the stationary contacts (53a, 53b) of the associated second contact path (D) and that, when the switching member is changed over from the operating position for continuous operation (D1) with low wiper speed to continuous operation (D2) with high wiper speed, both bridging contacts (50, 60) simultaneously rest upon the stationary contacts (53, 53a; 53a, 53b) in these modes of continuous operation (D1, D2) to be energized for a short time.

6. An electric switch according to claim 4, characterised in that, starting from a parking position (P), the switching member is in a first direction adjustable into an intermittent operation position (1) and in a second direction it is successively adjustable into a tip-wiper operation position (1), in a first continuous operation position (D1) with low wiper speed and a second continuous operation position (D2) with high wiper speed and that the contact paths (A, B) run at least substantially parallel or concentrically and that the first contact path (A) has four stationary contacts (53e, 53, 53a, 53b) of which the second (53) and the third (53a) ones are also available on the second contact path (B), and of which contacts two successive ones each may be acted upon by the first bridging contact (30) in order to effect the operating positions (I, P, T, D1, D2) and of which contacts the first one (53e) is coupled with a parking position disk (1), via which it can either be connected with the positive pole (53a) or with the negative pole (31) of a voltage source supplying the electric motor (M) and of which contacts the second one (53) is connected to the brush (5) of the electric motor (M) effecting continuous operation with low wiper speed and of which the third one (53a) is connected to the positive pole (53a) of the voltage source and of which the fourth one (53b) to the brush (6) of the electric motor (M) effecting continuous operation (D2) with high wiper speed and that the second contact path (B) has three stationary contacts (1, 53a, 53) of which the first one (1) is operatively connected with a timing element (3) and the second one (53a) corresponds to the third one (53a) of the first contact path (A) and the third one (53) with the second one of the first contact path (A) and of which two successive ones each can be acted upon by the second bridging contact (40) for effecting the operating positions (I, P, T, D1).

7. A switch according to claim 6, characterised in that in the parking position (P) the first bridging contact (30) rests upon the first stationary contact (53e) of the first contact path (A), which stationary contact is thereby connected with the negative pole (31) of the voltage source, and which also rests upon the second stationary contact (53) of the first contact path (A), whereas the second bridging contact (40) rests upon the second stationary contact (53a) of the second contact path (B) and that, in the intermittent operation position (I), the first bridging contact (30) is connected with the first stationary contact (53e) of the first contact path (A) which is thereby not connected with the negative pole (31) of the voltage source and rests upon the second stationary contact (53) of the first contact path (A), whereas the second bridging contact (40) rests upon the first stationary contact (I) of the second contact path (B) and upon the second stationary contact (53a) and that in the tip-wiper operation position (T) and in the continuous operation position (D1) with low wiper speed the first bridging contact (30) rests upon the second (53) and the third stationary contact (53a) of the first contact path (A), whereas the second bridging contact (40) rests upon the second (53a) and the third (53) stationary contacts of the second contact path (B) and that in the continuous operation position (D2) with high wiper speed the first bridging contact (30) rests upon the third (53a) and fourth (53b) stationary contacts of the first contact path (A), whereas the second bridging contact (40) rests upon the third stationary contact (53a) of the second contact path (B).

8. A switch according to claim 5, characterised in that, starting from a parking position (P), the switching member is adjustable into a tip-wiper-operation position (T) in a first direction and, in a second direction, it is successively adjustable into an intermittent operation position (1), a first continuous operation position (D1) with low wiper speed and a second continuous operation position (D2) with high wiper speed and that the contact paths (C, D) run at least substantially parallel or concentrically and that the first contact path (C) has seven contact points (70, 53e1, 53e2, 531, 532, 53a1, 80), of which the two outer ones (70, 80) are vacant contacts and of which the second one (53e1) and the third one (53e2) are coupled with a parking position disk (1) via which they can either be connected with the positive pole (53a) or the negative pole (31) of a voltage source feeding the electric motor (M) and of which the fourth one (531) and the fifth one (532) are connected to the brush (5) of the electric motor (M) effecting continuous operation (D1) with low wiper speed and of which the sixth one (53a1) is connected to the positive pole (53a) of the voltage source and of which two each separated by a contact point can be acted upon by the first bridging contact (50) in order to effect four operating positions (T, P, I, D1) and that the second contact path (D) has eight contact points (53a5, 53a4, 53a3, 533, 53a2, I, 53a6, 53b) of which the first (53a5) one, the second one (53a4), the third (53a3) one, the fifth (53a2) one and the seventh (53a6) one are connected to the positive pole (53a) of the voltage source and of which the fourth one (533) is connected to the brush (5) of the electric motor (M) effecting continuous operation with low wiper speed and of which the sixth one (1) is connected to a timing element (3) and of which the eighth one (53b) is connected to the brush (6) of the electric motor (M) effecting continuous operation (D2) with high wiper speed and of which two each separated by two contact points can be acted upon by the second bridging contact (60) for effecting five operating positions (T, P, I, D1, D2).

9. A switch according to claim 8, characterised in that in the parking position (P) the first bridging contact (50) rests upon the second contact point (53e1) of the first contact path (C), which contact point is thereby not connected with the positive pole (53a) of the voltage source, and it rests upon the fourth contact point (531) of the first contact path (C), whereas the second bridging contact (60) rests upon the second (53a4) and fifth (53a2) contact points of the second contact path (D) and that in the tip-wiper-operation position (T) the first bridging contact (50) rests upon the first vacant contact (70) and upon the third contact point (53e2) of the first contact path (C), whereas the second bridging contact (60) rests upon the first (53a5) and fourth contact points (533) of the second contact path (D) and that in the intermittent operation position (I) the first bridging contact (50) rests upon the third contact point (53e2), which is thereby connected with the positive pole (53a) of the voltage source, and upon the fifth (532) contact point of the first contact path (C), whereas the second bridging contact (60) rests upon the third (53a3) and sixth (I) contact points of the second contact path (D) and that in the continuous operation position (D1) with low wiper speed the first bridging contact (50) rests upon the fourth (531) and sixth (53a1) contact points of the first contact path (C), whereas the second bridging contact (60) rests upon the fourth (533) and seventh (53a6) contact points of the second contact path (D) and that, during transition from the position of continuous operation (D1) with low wiper speed into continuous operation (D2) with high wiper speed the first bridging contact (50) rests upon the fourth (531) and sixth (53a1) contact points of the first contact path (C) until the second bridging contact (60) rests upon the fifth (53a2) and eighth (53b) contact points of the second contact path (D) and that the first bridging contact (50) then rests upon the fifth contact point (532) and the second vacant contact (80) of the first contact path (C).

10. A switch according to claims 8 and 9, characterised in that the fourth contact point (531) of the first contact path (C) has a lengthening extending in the direction of the fifth contact point (532) of the first contact path (C) and that the sixth contact point (53a1) of the first contact path (C) has a lengthening directed towards the second vacant contact (80) of the first contact path (C) and that the fifth contact point (53a2) of the second contact path (D) has a lengthening directed towards the fourth stationary contact (533) of the second contact path (D) and that the eighth contact point (53b) of the second contact path (D) has a lengthening directed towards the seventh contact point (53a6) of the second contact path (D).

11. A switch according to one of the preceding claims, characterised in that at least one (30) of the bridging contacts (30, 40; 50,60) is formed as a double bridging contact.

12. A switch according to one of the preceding claims, characterised in that the stationary contacts (53, 53e, 53a, 53b, I) and the contact paths (A, B; C, D) are part of a conductor blank punched out from sheet metal.

13. A switch according to claim 12, characterised in that the stationary contacts (53, 53e, 53a, 53b, I) and the contact paths (C, D) are part of a conductor blank injection-moulded around with plastic material.

**Revendications**

1. Commutateur électrique pour commander, à partir d'une source de tension, un moteur électrique d'un système essuie-glace qui est utilisé notamment pour des véhicules automobiles, avec un élément de commutation (13) qui peut être réglé manuellement à plusieurs positions de commutation pour des modes de fonctionnement continu ainsi que pour un mode de fonctionnement intermittent du système essuie-glace, et qui présente deux ponts de contact (30,40; 50,60), dont le premier (30; 50) coopère avec des contacts fixes (53e,53,53a,53b; 53e,53,53a) sur une première voie de contact (A; C) et dont le deuxième (40; 60) coopère avec des contacts fixes (I,53a,53; 53a,53,I,53b) sur une deuxième voie de contact (B; D), des circuits électriques différents pouvant être connectés par l'intermédiaire des deux ponts de contact (30,40: 50,60) lorsque l'élément de commutation (13) se trouve dans la position de commutation correspondant au mode de fonctionnement intermittent, caractérisé en ce que les deux ponts de contact (30,40; 50,60) peuvent être connectés électriquement en parallèle dans le même circuit électrique lorsque l'élément de commutation (13) se trouve dans au moins une position de commutation correspondant à un mode de fonctionnement continu (D1).

2. Commutateur électrique selon la revendication 1, caractérisé en ce que les deux ponts de contact (30,40; 50,60) peuvent être connectés électriquement en parallèle dans un circuit électrique entre la source de tension (31,53a) et le moteur électrique (M).

3. Commutateur électrique selon la revendication 2, caractérisé en ce que l'élément de commutation (13) peut être déplacé à une position de commutation pour un mode de fonctionnement continu (D1) à vitesse de balayage inférieure et à une position de commutation pour un mode de fonctionnement continu (D2) à vitesse de balayage supérieure, et en ce que les deux ponts de contact (30,40; 50,60) peuvent être connectés électriquement en parallèle dans la position de commutation pour le mode de fonctionnement continu (D1) à vitesse de balayage inférieure.

4. Commutateur électrique selon la revendication 2 ou 3, caractérisé en ce que l'élément de commutation (13) peut être déplacé à une position de commutation pour un mode de fonctionnement par impulsions (T) du système essuie-glace, et en ce que les deux ponts de contact (30,40) peuvent être connectés électriquement en parallèle dans cette position de commutation.

5. Commutateur électrique selon l'une des revendications précédentes, caractérisé en ce que l'élément de commutation peut être déplacé à des positions de commutation pour des fonctionnements continus (D1,D2) à vitesse de balayage respectivement inférieure et supérieure, et en ce que le fonctionnement continu (D1) à vitesse de balayage inférieure peut être enclenché par l'intermédiaire du premier pont de contact (50) et des contacts fixes (53,53a) de la première voie de contact associée (C), tandis que le fonctionnement continu (D2) à vitesse de balayage supérieure peut être enclenché par l'intermédiaire du deuxième pont de contact (60) et des contacts fixes de la deuxième voie de contact associée (D), et en ce que, lorsque l'élément de commutation est commuté de la position de commutation pour le fonctionnement continu (D1) à vitesse de balayage inférieure à celle pour le fonctionnement continu (D2) à vitesse de balayage supérieure, les deux ponts de contact (50,60) reposent temporairement et simultanément sur les contacts fixes (53,53a; 53,53b) qui peuvent être asservis dans ces modes de fonctionnement continu (D1,D2).

6. Commutateur électrique selon la revendication 4, caractérisé en ce que l'élément de commutation peut, à partir d'une position d'arrêt fixe (P), être déplacé dans une première direction à une position de fonctionnement intermittent (I), et, dans une deuxième direction, successivement à une position de fonctionnement par impulsions (T), à une première position de fonctionnement continu (D1) à vitesse de balayage inférieure et à une deuxième position de fonctionnement continu (D2) à vitesse de balayage supérieure, et en ce que les voies de contact (A,B) s'étendent au moins approximativement parallèlement ou concentriquement, et en ce que la première voie de contact (A) possède quatre contacts fixes (53e,53,53a,53b), dont le deuxième (53) et le troisième (53a) sont également présents sur la deuxième voie de contact (B), et dont deux contacts fixes successifs peuvent être chaque fois sollicités par le premier pont de contact (30) pour obtenir les positions de commutation (I,P,T,D1,D2), et dont le premier (53e) est accouplé à un disque d'arrêt fixe (1) par l'intermédiaire duquel il peut être raccordé soit au pôle plus (53a) soit au pôle moins (31) d'une source de tension alimentant le moteur électrique (M), et dont le deuxième (53) est raccordé au balai (5) du moteur électrique (M) qui produit la position de fonctionnement continu (D1) à vitesse de balayage inférieure, et dont le troisième (53a) est raccordé au pôle plus (53a) de la source de tension, et dont le quatrième (53b) est raccordé au balai (6) du moteur électrique (M) qui produit la position de fonctionnement continu (D2) à vitesse de balayage supérieure, et en ce que la deuxième voie de contact (B) possède trois contacts fixes (I,53a,53), dont le premier (I) est relié fonctionnellement à un relais temporisateur (3), et dont le deuxième (53a) correspond au troisième contact fixe (53e) de la première voie de contact (A), et le troisième (53) au deuxième de la première voie de contact (A), et dont deux contacts fixes successifs peuvent être chaque fois sollicités par le deuxième pont de contact (40) pour obtenir les positions de commutation (I,P,T,D1).

7. Commutateur électrique selon la revendication 6, caractérisé en ce que, dans la position d'arrêt fixe (P), le premier pont de contact (30) repose sur le premier contact fixe (53e) de la première voie de contact (A), qui est alors raccordé au pôle moins (31) de la source de tension, et sur le deuxième contact fixe (53) de la première voie de contact (A), tandis que le deuxième pont de contact (40) repose sur le deuxième contact fixe (53e) de la deuxième voie de contact (B), et en ce que, dans la position de fonctionnement intermittent (I), le premier pont de contact (30) repose sur le premier contact fixe (53e) de la première voie de contact (A), qui n'est alors pas raccordé au pôle moins (31) de la source de tension, et sur le deuxième contact fixe (53) de la première voie de contact (A), tandis que le deuxième pont de contact (40) repose sur le premier contact fixe (I) de la deuxième voie de contact (B) et sur le deuxième contact fixe (53a), et en ce que, dans la position de fonctionnement par impulsions (T) et dans la position de fonctionnement continu (D1) à vitesse de balayage inférieure, le premier pont de contact (30) repose sur le deuxième (53) et le troisième (53a) contact fixe de la première voie de contact (A), tandis que le deuxième pont de contact (40) repose sur le deuxième (53e) et le troisième (53) contact fixe de le deuxième voie de contact (B), et en ce que, dans la position de fonctionnement continu (D2) à vitesse de balayage supérieure, le premier pont de contact (30) repose sur le troisième (53a) et le quatrième (53b) contact fixe de la première voie de contact (A), tandis que le deuxième pont de contact (40) repose sur le troisième contact fixe (53a) de la deuxième voie de contact (B).

8. Commutateur électrique selon la revendication 5, caractérisé en ce que l'élément de commutation, à partir d'une position d'arrêt fixe (P), peut être déplacé dans une première direction à une position de fonctionnement par impulsions (T) et, dans une deuxième direction, successivement à une position de fonctionnement intermittent (I), à une première position de fonctionnement continu (D1) à vitesse de balayage inférieure et à une deuxième position de fonctionnement continu (D2) à vitesse de balayage supérieure, et en ce que les voies de contact (C,D) s'étendent au moins approximativement parallèlement ou concentriquement, et en ce que la première voie de contact (C) possède sept points de contact (70,53e1,53e2,531,532,53a1,80), dont les deux points de contact extérieurs (70,80) sont des contacts vacants et dont le deuxième (53e1) et le troisième (53e2) sont accouplés à un disque de position d'arrêt fixe (1) par l'intermédiaire duquel ils peuvent être raccordés soit au pôle plus (53a) soit au pôle moins (31) d'une source de tension alimentant le moteur électrique (M), et dont le quatrième (531) et le cinquième (532) sont raccordés au balai (5) du moteur électrique (M) qui produit le mode de fonctionnement continu à vitesse de balayage inférieure, et dont le sixième (53a1) est raccordé au pôle plus (53a) de la source de tension, et dont deux points de contact chaque fois séparés l'un de l'autre par un point de contact peuvent être sollicités par le premier pont de contact (50) pour obtenir quatre positions de commutation (T,P,I,D1), et en ce que la deuxième voie de contact (D) possède huit points de contact (53a5,53a4,53a3,533,53a2,I,53a6,53b), dont le premier (53a5), le deuxième (53a4), le troisième (53a3), le cinquième (53a2) et le septième (53a6) sont raccordés au pôle plus (53a) de la source de tension, et dont le quatrième (533) est raccordé au balai (5) du moteur électrique (M) qui produit le mode de fonctionnement continu à vitesse de balayage inférieure, et dont le sixième (I) est raccordé à un relais temporisateur (3), et dont le huitième (53b) est raccordé au balai (6) du moteur électrique (M) qui produit le mode de fonctionnement continu à vitesse de balayage supérieure, et dont deux points de contact chaque fois séparés l'un de l'autre par deux points de contact peuvent être sollicités par le deuxième pont de contact (60) pour obtenir cinq positions de commutation (T,P,I,D1,D2).

9. Commutateur électrique selon la revendication 8, caractérise en ce que, dans la position d'arrêt fixe (P), le premier pont de contact (50) repose sur le deuxième point de contact (53e1) de la première voie de contact (C), qui n'est alors pas raccordé au pôle plus (53e) de la source de tension, et sur le quatrième point de contact (531) de la première voie de contact (C), tandis que le deuxième pont de contact (60) repose sur le deuxième (53a4) et le cinquième (53a2) point de contact de la deuxième voie de contact (D), et en ce que, dans la position de fonctionnement par impulsions (T), le premier pont de contact (50) repose sur le premier contact vacant (70) et sur le troisième point de contact (53e2) de la première voie de contact (C), tandis que le deuxième pont de contact (60) repose sur le premier (53a5) et le quatrième (533) point de contact de la deuxième voie de contact (D), et en ce que, dans la position de fonctionnement intermittent (I), le premier pont de contact (50) repose sur le troisième point de contact (53e2), qui est alors raccordé au pôle plus (53a) de la source de tension, et sur le cinquième (532) point de contact de la première voie de contact (C), tandis que le deuxième pont de contact (60) repose sur le troisième (53a3) et le sixième (I) point de contact de la deuxième voie de contact (D), et ce que, dans la position de fonctionnement continu (D1) à vitesse de balayage inférieure, le premier pont de contact (50) repose sur le quatrième (531) et le sixième (53a1) point de contact de la première voir de contact (C), tandis que le deuxième pont de contact (60) repose sur le quatrième (533) et le septième (53a6) point de contact de la deuxième voie de contact (D), et en ce que, lors du passage de la position de fonctionnement continu (D1) à vitesse de balayage inférieure à la position de fonctionnement continu (D2) à vitesse de balayage supérieure, le premier pont de contact (50) repose sur le quatrième (531) et le sixième (53a1) point de contact de la première voie de contact (C) jusqu'à ce que le deuxième pont de contact (60) repose sur le cinquième (53a2) et le huitième (53b) point de contact de la deuxième voie de contact (D), et en ce que le premier pont de contact (50) repose alors sur le cinquième point de contact (532) et le deuxième contact vacant (80) de la première voie de contact (C).

10. Commutateur électrique selon les revendications 8 et 9, caractérisé en ce que le quatrième point de contact (531) de la première voie de contact (C) présente un prolongement orienté en direction du cinquième point de contact (532) de la première voie de contact (C), et en ce que le sixième point de contact (53a1) de la première voie de contact (C) présente un prolongement orienté vers le deuxième contact vacant (80) de la première voie de contact (C), et en ce que le cinquième point de contact (53a2) de la deuxième voie de contact (D) présente un prolongement orienté vers le quatrième contact fixe (533) de la deuxième voie de contact (D), et en ce que le huitième point de contact (53b) de la deuxième voie de contact (D) présente un prolongement orienté en direction du septième point de contact (53a6) de la deuxième voie de contact (D).

11. Commutateur électrique selon l'une des revendications précédentes, caractérisé en ce qu'au moins un (30) des ponts de contact (30,40; 50,60) est réalisé sous la forme d'un pont de contact double.

12. Commutateur électrique selon l'une des revendications précédentes, caractérisé en ce que les contacts fixes (53,53e,53a,53b,I) et les voies de contact (A,B; C,D) font partie d'une plaquette conductrice découpée dans de la tôle.

13. Commutateur électrique selon la revendication 12, caractérisé en ce que les contacts fixes (53,53e,53a,53b,I) et les voies de contact (C,D) font partie d'une plaquette conductrice enrobée de plastique moulé par injection.

Fig. 1

EP 0 249 166 B1

Fig. 2

Fig. 3

A.

B.

Fig. 4

Fig. 7

| Festkontakt – bzw. Anschlußbetätigung | | | | |
|---|---|---|---|---|
| | Schalter 10 | | Schalter 20 | |
| Schaltstellung | Kontakt-bahn A | Kontakt-bahn B | Kontakt-bahn C | Kontakt-bahn D |
| Parkstellung P | 53 - 53e | – | 53 - 53e | — |
| Intervallbetriebsart I | 53 - 53e | I - 53a | 53 - 53e | I - 53a |
| Tippwischbetriebsart T | 53 — 53a | 53 — 53a | — | 53 — 53a |
| Dauerbetriebsart D1 | 53 — 53a | 53 — 53a | 53 — 53a | 53 — 53a |
| Dauerbetriebsart D2 | 53a—53b | — | — | 53a—53b |

**Fig. 5**

## Schalter 20

## Position Schaltglied / Schalthebel

| Kontakt-brücke | Winkelgrad / Anschluß | 5° | 0° | 5° | 10° | 15° | 20° | 25° |
|---|---|---|---|---|---|---|---|---|
| 50 / 60 | 53e − 53 | | ▨▨▨▨▨ | ▨▨▨▨▨ | | | | |
| 50 / 60 | 53a − I | | | ▨ | | | | |
| 50 / 60 | 53a − 53 | ▨ | | | | ▨▨ | | |
| 50 / 60 | 53a − 53b | | | | | | ▨ | |

Tippwisch-betriebsstellung T

Park-stellung P

Intervall-betriebsstellung I

Dauerbetriebs-stellung D1

Dauerbetriebs-stellung D2

▨▨▨ Kontaktbrücke 50
▨▨▨ Kontaktbrücke 60

## Fig. 6

EP 0 249 166 B1